# EUROPEAN PATENT APPLICATION

(11) **EP 2 592 435 A1**
(43) Date of publication of application: **15.05.2013**
(21) Application number: 12183412.1
(22) Date of filing: 07.09.2012
(51) Int. Cl.: G01S 17/48, G01S 17/89, G01B 11/25, H04N 13/00

(54) **3D location sensing system and method**

(30) Priority: 09.11.2011 KR 20110116312
(71) Applicant: Samsung Electronics Co., Ltd., Suwon-si, Gyeonggi-do, 443-742 (KR)
(72) Inventor: Lee, Youn-seung, Seoul (KR); Kang, Ho-woong, Gyeonggi-do (KR)
(74) Representative: Davies, Robert Ean

(57) **Abstract**

A 3-dimensional (3D) location sensing system and method. The 3D location sensing system includes: an emitter which emits light including a plurality of markers onto an object; two or more photographing units which sense the light reflected from the object to respectively sense one or more markers; and a controller which calculates a 3D location coordinate of the object based on information about the one or more markers sensed by the two or more photographing units.

## Description

### BACKGROUND

### 1. Field

Apparatuses consistent with exemplary embodiments relate to a 3-dimensional (3D) location sensing system and a method thereof.

### 2. Description of the Related Art

A method of acquiring a 3-dimensional (3D) location of an object has been developed with the rapid advancements in technology. This method uses a 3D motion sensor technology which generally applies a Time-Of-Flight (TOF) principle. The TOF principle is to measure a time taken by light to contact a surface of an object and then return to an apparatus, such as a camera or the like, in order to measure a distance between the object and the apparatus.

A conventional 3D location sensing system includes an infrared projector which radiates infrared rays as pixilated markers and a depth sensing camera unit which senses information about a plurality of markers which are emitted from the infrared projector and reflected from the object.

An operation principle of the conventional 3D location sensing system is as follows. An X-Y coordinate is calculated by using a 2-dimensional (2D) location of a marker (a pixel light source). Also, a length in a depth direction (a Z coordinate; a 3D depth) is calculated by using a size and an intensity of the marker which are calculated according to a distance between the depth sensing camera unit and the marker. In other words, a part of an object close to the depth sensing camera unit brightens, and a part of the object distant from the depth sensing camera unit darkens. Therefore, a depth of the object is calculated by using a difference between the brightness and the darkness of the object.

The conventional 3D location sensing system determines a 3D depth according to a resolution of the depth sensing camera unit and the size or intensity of the marker. Therefore, a resolution of the conventional 3D location sensing system is rapidly lowered according to a depth of the object due to external factors such as a reduction in the distance with respect to the resolution of the depth sensing camera unit, a reduction in the size of the marker, etc. Accordingly, the reliability of a measured and calculated 3D depth is lowered.

### SUMMARY

One or more exemplary embodiments may overcome the above disadvantages and other disadvantages not described above. However, it is understood that one or more exemplary embodiment are not required to overcome the disadvantages described above, and may not overcome any of the problems described above.

One or more exemplary embodiment provide a 3-dimensional (3D) location sensing system and a method which can sense a 3D location at a high precision.

According to an aspect of an exemplary embodiment, there is provided a 3D location sensing system. The 3D location sensing system may include: an emitter which emits light including a plurality of markers onto an object; two or more photographing units which sense the light reflected from the object to respectively recognize one or more same marker; and a controller which calculates a 3D location coordinate of the object based on information recognized by the two or more photographing units.

The two or more photographing units may be disposed in left and right directions or in up and down directions to have different angles from each other.

The controller may calculate distances between each of the two or more photographing units and angles between each of the photographing units and the plurality of markers and the controller may calculate a depth to the object based on the calculated distances and angles.

The controller may calculate respective distances and angles between each of the two or more of photographing units and a marker and preset 2-dimensional (2D) coordinate values to calculate a 2D coordinate to the object.

The emitter may include an infrared projector.

The two or more photographing units may be infrared cameras.

The two or more photographing units may be first and second photographing units.

According to an aspect of another exemplary embodiment, there is provided a 3D location sensing method. The 3D location sensing method may include: emitting, by an emitter, light including a plurality of markers onto an object; sensing by two or more photographing units the light reflected from the object; recognizing by the two or more photographing units same markers; and calculating, by a controller, a 3D location coordinate of the object based on information about the recognized markers.

Calculating the 3D location coordinate of the object may include calculating respective distances between each of the two or more photographing units and respective angles between each of the two or more photographing units and the markers; and the calculating may further include calculating a depth to the object.

The calculating the 3D location coordinate of the object may include calculating respective distances and respective angles between each of the two or more photographing units and the markers and preset 2D coordinate values to calculate a 2D coordinate to the object.

As described above, according to the exemplary embodiments, in the 3D location sensing system and method, the two or more photographing units sense the markers. Therefore, precise 3D depth sensing is possible independently of effects of external factors such as a resolution of a camera, etc.

Also, although a plurality of objects are in similar locations (nearby), motions of the plurality of objects may be sensed through the precision 3D depth sensing. Therefore, commands of several objects may be identified.

In addition, the two or more photographing units may be disposed in the left and right directions or the up and down directions to have different angles from each other. Therefore, a depth and X-Y coordinate values may be further easily calculated.

Additional aspects of the exemplary embodiments may be set forth in the detailed description.

According to the present invention there is provided an apparatus and method as set forth in the appended claims. Other features of the invention will be apparent from the dependent claims, and the description which follows.

### BRIEF DESCRIPTION OF THE DRAWING FIGURES

For a better understanding of the invention, and to show how embodiments of the same may be carried into effect, reference will now be made, by way of example, to the accompanying diagrammatic drawings in which:
FIG. 1 is a view schematically illustrating a 3-dimensional (3D) location sensing system according to an exemplary embodiment; and
FIG. 2 is a view schematically illustrating a process of calculating a depth to an object using the 3D location sensing system according to an exemplary embodiment.

### DETAILED DESCRIPTION OF THE EXEMPLARY EMBODIMENTS

Hereinafter, exemplary embodiments will be described in greater detail with reference to the accompanying drawings.

In the following description, same reference numerals are used for analogous elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

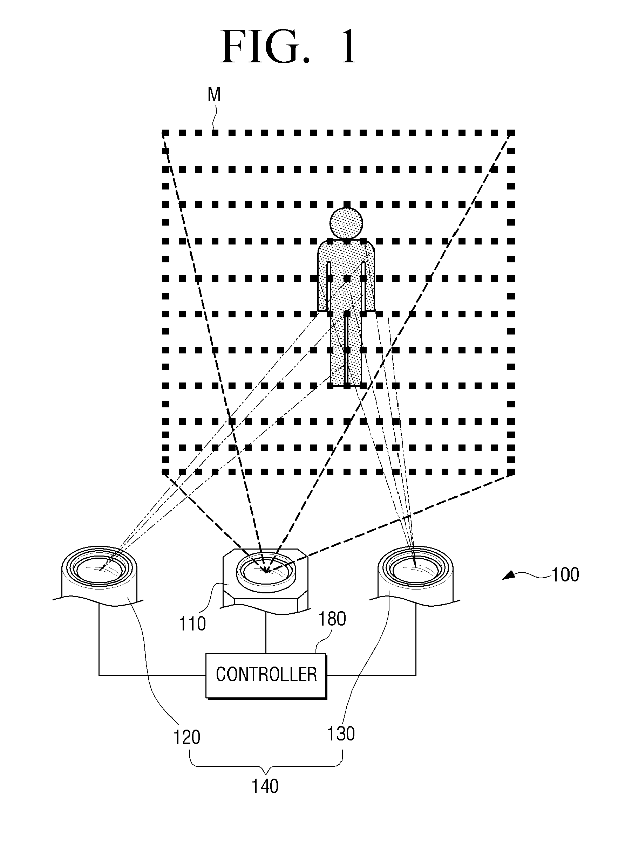

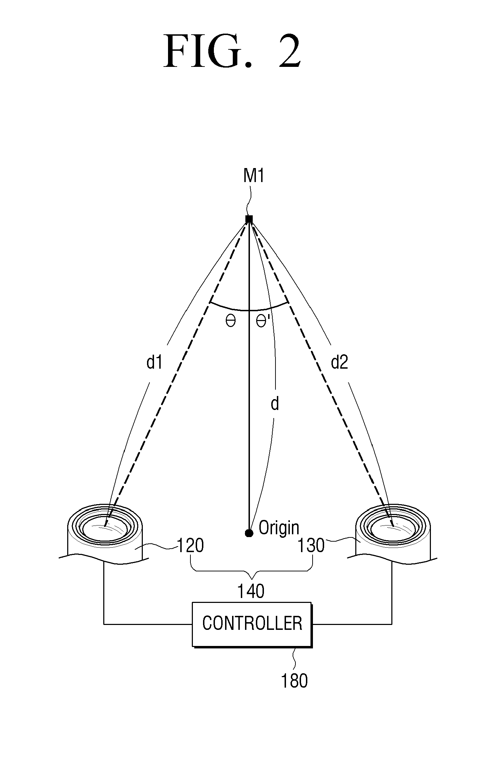

FIG. 1 is a view schematically illustrating a 3-dimensional (3D) location sensing system 100 according to an exemplary embodiment. FIG. 2 is a view schematically illustrating a process of calculating a depth to an object using the 3D location sensing system 100 according to an exemplary embodiment. The depth to an object refers to a Z distance from an object to some preset origin point.

Referring to FIG. 1, the 3D location sensing system 100 includes an emitter 110, a photographing unit 140, and a controller 180. The emitter 110 emits a plurality of pixilated markers M onto an object, and the photographing unit 140 senses information about the plurality of makers M which are reflected from the object. The controller 180 calculates a 3D coordinate of the object based on the recognized information through the photographing unit 140. That is, the distance in X, Y, and Z coordinates is calculated from a preset origin point.

The emitter 110 may include an infrared projector.

The photographing unit 140 includes first and second photographing units 120 and 130. In the present exemplary embodiment, the photographing unit 140 includes two photographing units but may include three or more photographing units.

The first and second photographing units 120 and 130 may respectively be infrared cameras.

The first and second photographing units 120 and 130 may be disposed in left and right directions or in up and down directions so as to have different angles from each other.

In the 3D location sensing system 100 according to an exemplary embodiment, a resolution of the photographing unit 140 is not considered at all when calculating a 3D location coordinate of the object. Therefore, the first and second photographing units 120 and 130 may be disposed to have different angles from each other.

A 3D location sensing method according to an exemplary embodiment will now be described.

In the 3D location sensing method according to an exemplary embodiment, light including a plurality of markers M is emitted onto an object. The first and second photographing units 120 and 130 sense the light reflected from the object and recognize the markers M. The controller 180 calculates a 3D location coordinate of the object based on the recognized information.

This will now be described in detail by dividing the 3D location coordinate into X, Y, and Z coordinates (i.e., a depth d to the object and an XY coordinate (a 2-dimensional (2D) coordinate).

A method of calculating a depth d of the 3D location sensing system 100 according to an exemplary embodiment will now be described.

As shown in FIGS. 1 and 2, the emitter 110 emits a plurality of infrared markers M onto the object. The emitter 110 includes the infrared projector and thus emits infrared rays as pixilated markers onto the object. Therefore, the countless number of infrared markers M are projected onto the object.

If the markers M are projected onto the object, and a depth of a particular one M1 of the markers M is to be calculated, the first and second photographing units 120 and 130 sense the particular marker M1.

The first and second photographing units 120 and 130 are respectively the infrared cameras and thus, sense the plurality of markers M which are emitted from the infrared projector and reflected from the object.

If the first and second photographing units 120 and 130 sense a particular marker M1, the first and second photographing units 120 and 130 transmit information about the particular marker M1 to the controller 180.

As shown in FIG. 2, the controller 180 calculates a distance d1 and angle θ between the first photographing unit 120 and the particular marker M1 and a distance d2 and an angle θ' between the second photographing unit 130 and the particular marker M1 to calculate a depth d from the particular maker M1. In other words, the 3D location sensing system 100 according to an exemplary embodiment may calculate a 3D depth from a marker M1 regardless of external factors such as a resolution of a camera, etc.

A method of calculating a 2D coordinate of the 3D location sensing system 100 will now be described.

In particular, if a 2D coordinate of the particular marker M1 is to be calculated, the first and second photographing units 120 and 130, respectively, senses the particular marker M1.

The controller 180 calculates the 2D coordinate of the particular marker M through a triangle measurement by using distances and angles between the particular marker M1 and the first and second photographing units 120 and 130 and 2D coordinate values which are respectively preset in the first and second photographing units 120 and 130.

Here, if the first and second photographing unit 120 and 130 are disposed in the left and right directions or in the up and down direction to have different angles from each other, a comparison for calculating a 3D depth from a marker M2 may be easily performed through the disposition made according to the difference between the angles. According to the abovedescribed method, a 2D coordinate value of the marker M2 may be calculated by using the 2D coordinates respectively set in the first and second photographing units 120 and 130, and distances and angles between the photographing units 120 and 130 and the marker M2.

The 3D location sensing system 100 according to an exemplary embodiment may form the markers M so that the markers M respectively have identifiers for identifying the markers M. In other words, the markers M may be formed to be identified through a series of figures, signs, etc.

Therefore, the 3D location sensing system 100 enables identifications of the markers M using the markers M. Also, the controller 180 may calculate a 2D coordinate only by sensing the markers M using the first and second photographing units 120 and 130.

For example, if an object moves in left and right directions, i.e., a depth d (a Z coordinate) of the object is not changed, and the markers M are identified through additional identification numbers, coordinates of the markers M indicating a location of the object which has not been moved may be compared with coordinates of the markers M indicating a location of the object which has been moved, thereby easily sensing the location of the object.

Also, 3D locations of the markers M, i.e., the depths d, may be calculated as described in an exemplary embodiment.

The foregoing exemplary embodiments re merely exemplary and are not to be construed as limiting an inventive concept. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art. That is, although an exemplary embodiment has been shown and described, it will be appreciated by those skilled in the art that changes may be made in an exemplary embodiment without departing from the principles and spirit of the invention, the scope of which is defined in the appended claims and their equivalents. The exemplary embodiments should be considered in a descriptive sense only and not for purposes of limitation. Therefore, the scope of the invention is defined not by the detailed description of an exemplary embodiment or embodiments but by the appended claims, and all differences within the scope will be construed as being included in the present invention.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A 3-dimensional (3D) location sensing system comprising:
an emitter which emits light including a plurality of markers onto an object;
a plurality of photographing units which sense the light reflected from the object to respectively recognize same markers; and
a controller which calculates a 3D location coordinate of the object based on information recognized by the plurality of photographing units.

2. The 3D location sensing system as claimed in claim 1, wherein the plurality of photographing units are disposed in left and right directions or in up and down directions to have different angles from each other.

3. The 3D location sensing system as claimed in claim 2, wherein the controller calculates distances between the plurality of photographing units and angles between the photographing units and the plurality of markers to calculate a depth to the object.

4. The 3D location sensing system as claimed in claim 2, wherein the controller calculates distances and angles between each of the plurality of photographing units and a marker and preset 2-dimensional (2D) coordinate values to calculate a 2D coordinate to the object.

5. The 3D location sensing system as claimed in claim 1, wherein the emitter comprises an infrared projector.

6. The 3D location sensing system as claimed in claim 1, wherein the plurality of photographing units are infrared cameras.

7. The 3D location sensing system as claimed in claim 1, wherein the plurality of photographing units are first and second photographing units.

8. A 3D location sensing method comprising:
emitting light comprising a plurality of markers onto an object using an emitter;
sensing the light reflected from the object using a plurality of photographing units;
recognizing same markers respectively using the plurality of photographing units; and
calculating a 3D location coordinate of the object based on information about the sensed markers using the controller.

9. The 3D location sensing method as claimed in claim 8, wherein the calculation of the 3D location coordinate of the object comprises calculating distances between the plurality of photographing units and angles between each of the plurality of photographing units and the markers to calculate a depth to the object.

10. The 3D location sensing method as claimed in claim 8, wherein the calculation of the 3D location coordinate of the object comprises calculating distances and angles between each of the plurality of photographing units and the markers and preset 2D coordinate values to calculate a 2D coordinate to the object.

11. The 3D location sensing method as claimed in claim 8, wherein the sensing and recognizing the light reflected from the object is sensed by two photographing units.
